(19) **Europäisches Patentamt / European Patent Office / Office européen des brevets**

(11) **EP 4 517 612 A1**

(12) **EUROPEAN PATENT APPLICATION**

(43) Date of publication:
05.03.2025 Bulletin 2025/10

(21) Application number: 24191640.2

(22) Date of filing: 30.07.2024

(51) International Patent Classification (IPC):
$G06Q\ 10/04^{(2023.01)}$     $G06Q\ 30/08^{(2012.01)}$
$G06Q\ 40/04^{(2012.01)}$     $G06Q\ 50/06^{(2024.01)}$

(52) Cooperative Patent Classification (CPC):
G06Q 40/04; G06Q 10/04; G06Q 30/08;
G06Q 50/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.08.2023 IN 202321057751

(71) Applicant: **Tata Consultancy Services Limited
Maharashtra (IN)**

(72) Inventors:
- **VELAYUDHAN KUMAR, Mohan Raj**
  **600113 Chennai, Tamil Nadu (IN)**
- **GUPTA, Shrayash**
  **411057 Pune, Maharashtra (IN)**
- **BICHPURIYA, Yogesh Kumar**
  **411057 Pune, Maharashtra (IN)**
- **SARANGAN, Venkatesh**
  **600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM OF GENERATING OPTIMAL PORTFOLIO FOR SELLER BIDDING STRATEGY IN DECOUPLED MULTI-ENERGY MARKETS**

(57) This disclosure relates generally to method and system of generating optimal portfolio for seller bidding strategy in decoupled multi-energy markets. Energy sellers generate multiple forms of energy and can trade in specific energy markets by maximizing returns and minimizing risk of price fluctuations. Portfolio optimization across multi-energy markets lacks proper consideration of inter energy conversion efficiencies, market price risks, and asset constraints. The present disclosure provides to multi-energy markets prior to bidding day at least one energy type available with a seller, a bidding price of corresponding energy type, and at least one energy type required by a market participant to generate an optimal portfolio. The seller determines a risk factor for energy type in the multi-energy markets and then computes a total risk for each energy type. The optimal portfolio splits the generated volume of each energy type to bid at every timeslot of the multi-energy markets.

300

providing by a seller to multi-energy markets prior to bidding day at least one energy type available with the seller, a bidding price of corresponding energy type, and at least one energy type required by a — 302

forecast using a neural hierarchical interpolation for time series forecasting (NHITS) an energy market price uncertainties of at least one energy type at the plurality of timeslots on the bidding day in the multi-energy markets based on historical market prices — 304

provide by the seller to the multi-energy markets a volume of at least one energy type generated based on a plurality of parameters, wherein the seller being an energy participant provides at least one energy type using a multi-carrier energy (MES) system at locations of a power supplier to the multi-energy markets — 306

determine for each energy type of the seller to bid in the multi-energy markets a risk factor based on a market price risk and a forecasting risk by inputting the historical market price and an actual energy market price of corresponding energy type and computing a total risk for the energy types generated by the seller — 308

generate an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets — 310

**FIG.3**

**Description**

CROSS-REFERENCE TO RELATED APPLICATIONS AND PRIORITY

The present application claims priority to Indian application no. 202321057751, filed on 29th August, 2023.

TECHNICAL FIELD

The disclosure herein generally relates to energy market bidding strategy, and, more particularly, to method and system of generating optimal portfolio for seller bidding strategy in decoupled multi-energy markets.

BACKGROUND

In new competitive landscape of electricity markets, risk analysis is a powerful attribute to guide investors on contract uncertainty and energy prices. Generally, there is a growing revolution towards better energy utilization and diversification of energy sources such as sustainable renewable energy and carbon light or neutral sources. This revolution has increased possibilities for generating and consuming different types of energy type such as electricity, heat, hydrogen, natural gas, and the like. However, multi-energy type has made possible the adaptation of multi-carrier energy systems (MES). The presence of multiple forms of energy demands contribution to the emergence of different energy markets similar to the existence of electricity markets today.

In existing energy trade markets, energy generators are capable of generating more than one form of energy and are typically traded for one form of energy, for example combined heat and power (CHP) generator trades only in electricity markets. In another existing technique, there is a lack in bidding energy generated in multiple energy markets as they have access to only one energy market to trade generated volumes as seller. This reduces revenue earned owing to price variation of the electricity market. The need to manage the price risk of electricity is greater than in any other markets because there is a high variation in the price of electricity over both time and space. Potentially it is essential to address challenges of energy contracts that involves risk and return for seamless operation in multi-energy trading market for optimal energy flows between different energy types.

SUMMARY

Embodiments of the present disclosure present technological improvements as solutions to one or more of the above-mentioned technical problems recognized by the inventors in conventional systems. For example, in one embodiment, a system for generating optimal portfolio for seller bidding strategy in decoupled multi-energy markets is provided. The system includes receiving by a multi-energy markets prior to bidding day at least one energy type available with a seller, a bidding price of corresponding energy type, and at least one energy type required by a market participant. The bidding day includes a plurality of timeslots at regular intervals for bidding in at least one energy type among the multi-energy markets. The method further forecasts using a neural hierarchical interpolation for time series forecasting (NHITS) an energy market price uncertainties of at least one energy type at the plurality of timeslots on the bidding day in the multi-energy markets based on historical market prices. The seller further provides to the multi-energy markets a volume of at least one energy type generated based on a plurality of parameters, wherein the seller being an energy participant provides at least one energy type using a multi-carrier energy (MES) system at locations of a power supplier to the multi-energy markets.

Furthermore, for each energy type of the seller to bid in the multi-energy markets a risk factor is determined based on a market price risk and a forecasting risk by inputting the historical market price and an actual energy market price of corresponding energy type. Then, a total risk is computed for the energy types generated by the seller. The method further identifies a risk factor from the multi-energy markets for each energy type of the seller. The risk factor based on a market price risk and a forecasting risk by inputting the historical market price and an actual energy market price of corresponding energy type and computing a total risk for the energy types generated by the seller. Then, an optimal portfolio is generated for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

In another aspect, a method for generating optimal portfolio for seller bidding strategy in decoupled multi-energy markets is provided. The method includes for generating optimal portfolio for seller bidding strategy in decoupled multi-energy markets is provided. The system includes receiving by a multi-energy markets prior to bidding day at least one energy type available with a seller, a bidding price of corresponding energy type, and at least one energy type required by a market participant. The bidding day includes a plurality of timeslots at regular intervals for bidding in at least one energy type among the multi-energy markets. The method further forecasts using a neural hierarchical interpolation for time series forecasting (NHITS) an energy market price uncertainties of at least one energy type at the plurality of timeslots on the bidding day in the multi-energy markets based on historical market prices. The seller further provides to the multi-energy markets a volume of at least one energy type generated based on a plurality of parameters, wherein the seller being an energy participant provides at least one energy type using a multi-carrier energy (MES) system at locations of a power supplier to the multi-energy markets.

Furthermore, for each energy type of the seller to bid in the multi-energy markets a risk factor is determined based on a market price risk and a forecasting risk by inputting the historical market price and an actual energy market price of corresponding energy type. Then, a total risk is computed for the energy types generated by the seller. The method further identifies a risk factor from the multi-energy markets for each energy type of the seller. The risk factor based on a market price risk and a forecasting risk by inputting the historical market price and an actual energy market price of corresponding energy type and computing a total risk for the energy types generated by the seller. Then, an optimal portfolio is generated for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

In yet another aspect, a non-transitory computer readable medium for generating optimal portfolio for seller bidding strategy in decoupled multi-energy markets is provided. The system includes receiving by a multi-energy markets prior to bidding day at least one energy type available with a seller, a bidding price of corresponding energy type, and at least one energy type required by a market participant. The bidding day includes a plurality of timeslots at regular intervals for bidding in at least one energy type among the multi-energy markets. The method further forecasts using a neural hierarchical interpolation for time series forecasting (NHITS) an energy market price uncertainties of at least one energy type at the plurality of timeslots on the bidding day in the multi-energy markets based on historical market prices. The seller further provides to the multi-energy markets a volume of at least one energy type generated based on a plurality of parameters, wherein the seller being an energy participant provides at least one energy type using a multi-carrier energy (MES) system at locations of a power supplier to the multi-energy markets.

Furthermore, for each energy type of the seller to bid in the multi-energy markets a risk factor is determined based on a market price risk and a forecasting risk by inputting the historical market price and an actual energy market price of corresponding energy type. Then, a total risk is computed for the energy types generated by the seller. The method further identifies a risk factor from the multi-energy markets for each energy type of the seller. The risk factor based on a market price risk and a forecasting risk by inputting the historical market price and an actual energy market price of corresponding energy type and computing a total risk for the energy types generated by the seller. Then, an optimal portfolio is generated for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 is an illustrative system (alternatively referred as optimal portfolio generation system) to generate an optimal portfolio, in accordance with some embodiments of the present disclosure.

FIG.2 illustrates functional multi-energy markets portfolio optimization components of an exemplary hardware implementation of the system of FIG.1, in accordance with some embodiments of the present disclosure.

FIG.3 is a flowchart of an exemplary method of the optimal portfolio generated for multi-energy markets using the system of FIG. 1, in accordance with some embodiments of the present disclosure.

FIG.4 illustrates an example multi-energy markets for the generation of optimal portfolio using the system of FIG. 1, in accordance with some embodiments of the present disclosure.

FIG.5A illustrates an example heat market at average hourly timeslot using the system of FIG.1, in accordance with some embodiments of the present disclosure.

FIG.5B illustrates an example electricity market at average hourly timeslot using the system of FIG.1, in accordance with some embodiments of the present disclosure.

FIG.6A illustrates a plot of heat generation depicting returns versus risk weighted standard deviation using the system of FIG.1, in accordance with some embodiments of the present disclosure.

FIG.6B illustrates a plot of heat generation depicting returns versus risk aversion coefficient using the system of FIG.1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Energy is generated by a seller and is consumed by utilities or consumers. Trade between energy generators and consumers takes place through long-term bilateral contracts or through energy markets. In a day-ahead energy market, seller(s) and consumers simultaneously tender their bids to specific energy type market for example electricity, heat, hydrogen, and the like for the next day. Generally, energy seller(s) prefer to trade one day-ahead energy markets following uniform pricing mechanism as a first option to sell the generated energy volumes. For the next consecutive day energy market seller bids the energy type with appropriate offer price into at least one energy market either hourly or half-hourly bidding timeslot. Market operator (MO) manages trading operation in the energy market and clears the bids at market clearing price (MCP) and quantity in multi-energy systems (MES).

The term "seller" or "energy seller" refers to an energy generator generating at least one energy type, for example renewable energy, electricity, heat, natural gas, hydrogen, and the like.

The term "multi-energy markets" refers to a type of commodity market dealing with at least one energy type, for example electricity, heat, fuel products and the like. The multi-energy markets ensure interoperability among different energy types through inter-energy interactions. This facilitates trading of different energy types such as electricity, heat by sellers and end consumers to meet their respective needs.

One of the main challenges of the MES is ensuring seamless operation and managing optimal energy flow management of different energy types of energy between various entities such as heat pumps, combined heat, and power (CHP) units, boilers, electrolysis, fuel cells and the like. The emergence of multi-energy systems (MES) has restructured the way different types of energy market influence the decisions made by energy buying participants such as consumers, market operators, network operators, energy generation industries and the like. These decisions will be more complicated when there is volatility or risks across different energy markets. Risks can be due to generator technologies, weather or seasonal conditions, energy market conditions, inter-energy interconnects, market interconnects and the like.

To address the above risks, energy market participants specifically sellers and consumers or buyers participate and trade in different multi-energy markets. The problem of allocating energy resources between different energy markets is formulated as a mean-variance portfolio optimization (PO). However, multi-energy portfolio optimization problem from energy supplier perspective is complex and tedious.

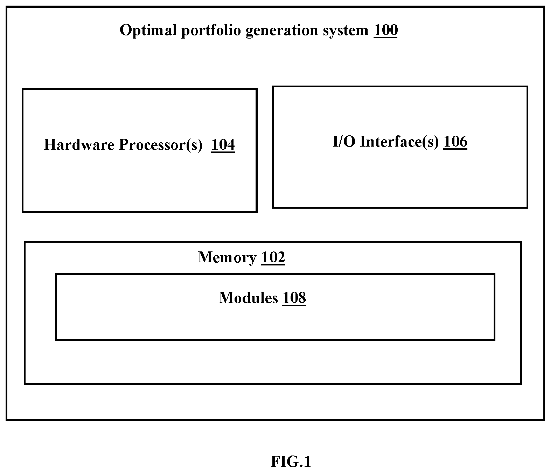

Embodiments herein provide a method and system for generating optimal portfolio for seller bidding strategy in decoupled multi-energy markets. The system may be alternatively referred as an optimal portfolio generation system. The system focuses on portfolio optimization problem which maximizes revenue or profits and also returns the level of risk associated during bid for the seller. Energy generators or seller generate one or multiple forms of energy and can trade in specific energy markets to maximize returns while minimizing risk of price fluctuations. Day-ahead energy markets are preferred by energy participants such as the seller and the consumers as they provide better estimates of demand and supply following uniform bid pricing mechanism. However, in multi-energy markets sellers have multiple options to sell in a way to maximize seller revenue while simultaneously weighing the risks associated with portfolio options. The optimal portfolio is the bidding strategy determined for the seller on the basis of historical performance of multi-energy markets. Optimizing seller portfolio requires estimates of market clearing prices of different energy markets and recalibration of supply volumes of generators. The disclosed system is further explained with the method as described in conjunction with FIG. 1 to FIG.6B below.

**Glossary**

| Parameters | |
|---|---|
| **Notation** | **Description** |
| $n$ | Number of energy type markets (Electricity, Heat markets) = 2 |
| $T$ | Number of hourly timeslots = 24 |
| $ce$ | Conversion volume efficiency= $R^{n*n}$ |

(continued)

| Parameters | |
| --- | --- |
| Notation | Description |
| $k_i$ | MCP risk aversion coefficient of energy type $i$ |
| $p2h$ | Power to heat ratio of CHP |
| $\eta_i$ | Forecast price error risk aversion coefficient for energy type $i$ |
| $conv\%$ | Conversion cost in % |
| $\overline{\phi}, \phi_i$ | Generator max and min generation capacity volume for energy type $i$ |
| $eff(t)$ | Fuel efficiency of generator |
| $A_q(t)$ | Contractual procurement agreement for natural gas volume per time-block |
| $A_q(t)$ | Contractual procurement price for natural gas per time-block |
| $R_i^u, R_i^d$ | Generators ramp-up and ramp-down capacity per unit hour |
| Variables | |
| $c(t)$ | Actual Market clearing price (MCP) of the energy markets; $R^{n*n}$ |
| $\hat{c}(t)$ | Forecasted MCP ; $R^{n*n}$ $$\text{Where} \begin{cases} primary\ energy\ market & if\ i = j \\ secondary\ energy\ market & if\ i \neq j \end{cases} ; i \in (1 \ldots n)$$ |
| $x(t)$ | Generators selling portfolio ; $R^{n*n}$ |
| $cc(t)$ | Conversion cost; $R^{n*n}$ |
| $g(t)$ | Generator's supply quantity in energy market; $R^{n*1}$ |
| $Q(t)$ | MCP covariance matrix; $R^{n*n}$ |
| $q_c(t)$ | Market price forecast error covariance matrix; $R^{n*n}$ |
| $c_{ng}(t)$ | MCP of natural gas market |
| $U_q(t)$ | Un-utilized natural gas volume |

Referring now to the drawings, and more particularly to FIG. 1 through FIG.6B where similar reference characters denote corresponding features consistently throughout the figures, there are shown preferred embodiments and these embodiments are described in the context of the following exemplary system and/or method.

FIG. 1 is an illustrative system (alternatively referred as optimal portfolio generation system) to generate an optimal portfolio, in accordance with some embodiments of the present disclosure. In an embodiment, the optimal portfolio generation system 100 includes processor(s) 104, communication interface(s), alternatively referred as or input/output (I/O) interface(s) 106, and one or more data storage devices or memory 102 operatively coupled to the processor(s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical subject interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

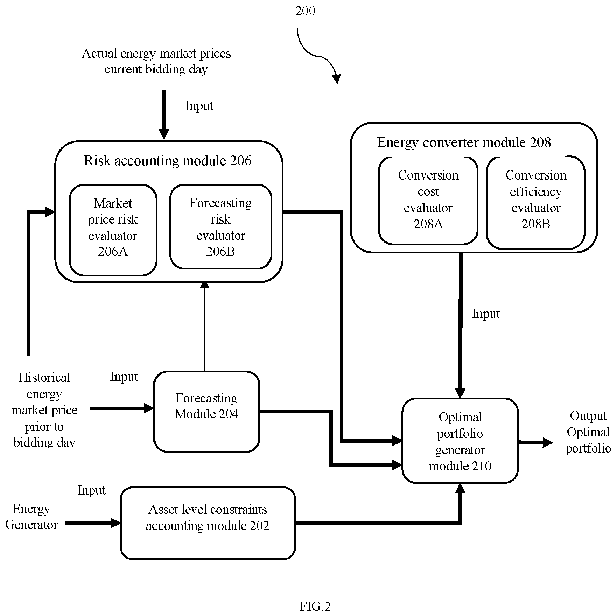

In an embodiment, the memory 102 includes a plurality of modules 108 can also include various sub-modules as depicted in FIG.2 such as an asset level constraints accounting module 202, a forecasting module 204, a risk accounting module 206, an energy converter module 208, and an optimal portfolio generator module 210. The plurality of modules 108 include programs or coded instructions that supplement applications or functions performed by the system 100 for executing different steps involved in the process of generating optimal portfolio of the system 100. The plurality of modules 108, amongst other things, can include routines, programs, objects, components, and data structures, which performs particular tasks or implement particular abstract data types. The plurality of modules 108 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

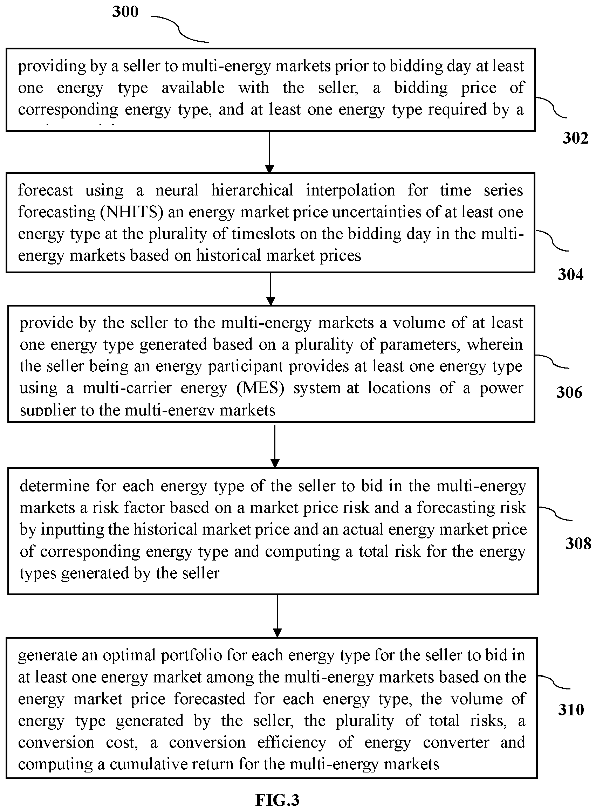

The memory 102 may comprise information pertaining to input(s)/output(s) of each step performed by the processor(s) 104 of the system 100 and methods of the present disclosure. Functions of the components of system 100, for identifying malicious agent while handling subject request having at least one sensitive attribute, are explained in conjunction with FIG.2 and FIG.3 providing flow diagram, architectural overviews, and performance analysis of the system 100.

FIG.2 illustrates functional multi-energy markets portfolio optimization components of an exemplary hardware implementation of the system of FIG. 1, in accordance with some embodiments of the present disclosure. The system 200 may be an example of the system 100 (FIG. 1). In an example embodiment, the system 200 may be embodied in, or is in direct communication with the system, for example the system 100 (FIG. 1).

Portfolio optimization across multi-energy markets for seller bidding strategy lack in proper consideration of inter energy conversion efficiencies, market price risks and asset constraints. The method of the present disclosure focus on the following aspects such as, 1. Generic multi-energy portfolio optimization model that can be used by different energy generators such as combined cycle gas turbine (CCGT), CHP, and heat pump to bid in the multi-energy markets with the goal to maximize return-risk outcome, 2. Energy generation for specific ramp and capacity constraint models and 3. Arrive at risk-return trade-off considering market price variability, market price forecast error variability, converters efficiency, conversion cost variability, and generators risk aversion levels.

The system 200 includes the asset level constraints accounting module 202, a forecasting module 204, a risk accounting module 206, an energy converter module 208, and an optimal portfolio generator module 210.

The asset level constraints accounting module 202 determines amount of energy generated by the seller.

The forecasting module 204 predicts consecutive days timeslot market price for each energy type of the market electricity, heat, hydrogen, and the like.

The risk accounting module 206 comprises a market price risk evaluator 206A and a forecasting risk evaluator 206B which considers a plurality of risks associated with the energy market price uncertainties and energy market price forecasting.

The energy converter module 208 comprises a conversion cost evaluator 208A and a conversion efficiency evaluator 208B.

The optimal portfolio generator module 210 generates optimal portfolio for each energy type for the seller to bid on at least one energy market.

FIG.3 is a flowchart of an exemplary method for generating optimal portfolio for multi-energy markets using the system of FIG. 1, in accordance with some embodiments of the present disclosure. In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG. 1 through FIG.2, and the steps of flow diagram as depicted in FIG.3 through FIG.6B. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method 300 the one or more hardware processors 104 provide by a seller to multi-energy markets prior to bidding day at least one energy type available with a seller, a bidding price of corresponding energy type, and at least one energy type required by a market participant, wherein the bidding day includes a plurality of timeslots at regular intervals for bidding on at least one energy type in the multi-energy markets.

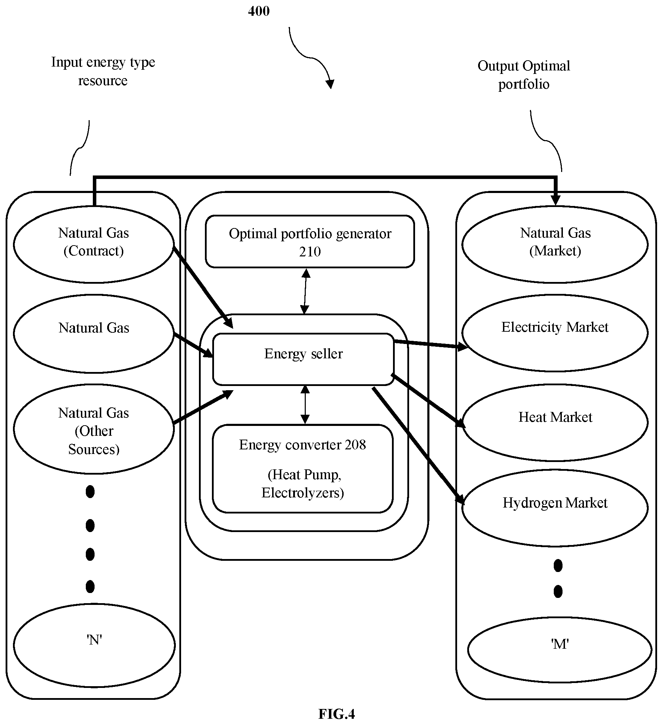

As an illustrative example (FIG.4), for the purpose of explanation the system 100 clearing of energy market takes place a day prior in advance based on bids submitted by the energy generators or sellers and consumers. So, the seller places it bid a day prior for the volume of generated energy. There are multi-energy markets, which provides the seller with multiple options to bid on its generated energy. Using the simulation setup, the example energy type may include three types of generators such as the combined cycle gas turbine (CCGT), the heat pump and the combined heat and power (CHP).

Referring to the example combined cycle gas turbine (CCGT) generator obtains inputs for example natural gas. The natural gas may be obtained in contract or from other sources. The sources being external sources as an input fuel to generate the energy. Here, the demand for the natural gas can be catered through multiple sources or options. The CCGT generator, produces electricity using the natural gas. The electricity can be converted into other energy types using the energy converter 208. Different forms of energy type are traded in different day-ahead energy markets by placing the bids.

Here, the portfolio optimization objective function for generating the optimal portfolio for seller bidding strategy is given in Equation 1, which maximizes total sum of revenues depending on the portfolio allocations into different energy type markets and the corresponding risk associated due to the market clearing price (MCP) fluctuations across various energy type markets.

$$\max_{x_i(t)} c_i(t)x_i(t)^T - k \cdot x_i(t)Q(t)x_i(t)^T \text{ ------ Equation 1}$$

Every risk associated with the portfolio options is quantified by a covariance function Q(t). Where, Q(t) is the covariance between the MCP from muti-energy markets. The Parameter $k$ is represented as risk aversion coefficient and models the risk aversion intent of the seller. Risk aversion coefficient $k = 0$ indicating that the seller has no intend of the risk aversion. With increase in the risk aversion coefficient value $k$, the risk taken by the seller decreases.

Equation 2 and Equation 3 is an equality constraint that ensures portfolio allocations into multi-energy markets type and should be equal to the supply bid volume at all timeslots.

$$subject\ to: \ \sum_{j=1}^n x_{i,j}(t) = g_i(t) \text{ ------- Equation 2}$$

$$x_{i,j}(t) \geq 0; \ \forall j \text{ ---------- Equation 3}$$

This formulation is a quadratic optimization (QP) problem and gives optimal allocations $x*(t)$.

At step 304 of the method 300 the one or more hardware processors 104 forecast using a neural hierarchical interpolation for time series forecasting (NHITS) an energy market price uncertainties of at least one energy type at the plurality of timeslots on the bidding day in the multi-energy markets based on historical market prices.

The forecasting module 204 obtains historical energy market prices prior to the bidding day as input. The neural hierarchical interpolation for time series forecasting (NHITS) predicts consecutive day MCP market price for each energy type market at every timeslot.

At step 306 of the method 300 the one or more hardware processors 104 providing by the seller to the multi-energy markets a volume of at least one energy type generated based on a plurality of parameters, wherein the seller being an energy participant provides at least one energy type using a multi-carrier energy (MES) system at locations of a power supplier to the multi-energy markets.

Further, the asset level constraints accounting module 206 obtains at least one energy type generated by the seller as input. The plurality of parameters includes a previous timeslot, a maximum energy limit, a minimum energy limit, a ramp up limit, a ramp down limit and a natural gas input limit.

At step 308 of the method 300 the one or more hardware processors 104 determine for each energy type of the seller in the multi-energy markets a risk factor based on a market price risk and a forecasting risk by inputting the historical market price and an actual energy market price of corresponding energy type and computing a total risk for the energy types generated by the seller.

Here, for the said example the risk accounting module 206 obtains the historical market price and an actual energy market price of corresponding energy type as input. The historical energy market prices are considered to form the covariance matrix which traps the relationship between multi-energy markets prices.

The market price risk evaluator 206A of the risk accounting module 206 determines the risk due to energy type market price uncertainties.

The forecasting risk evaluator 206B of the risk accounting module 206 determines the risk due to a forecasting error of the market price.

In the portfolio optimization involving day-ahead markets, the revenue is optimized prior day in advance for the forecasted MCP $\hat{c}(t)$ arrived at based on the past historical price values. In this formulation, the variability of MCP across multi-energy markets. For example, if the seller considers renewable energy for energy generation chances of risks due to exogenous variables are to be managed and hence these variables are to be included into the portfolio optimization formulation.

The variation in value of these risk factor determines amount of corresponding risk the seller is inclined to consider. The risk factor $K$ is used to track the risk due to energy market price uncertainties as depicted in Equation 4,

$$\max_{x_i(t)}\left((c_i(t) - cc_i)ce\, x_i(t)^T\right) - k_i x_i(t)Q(t)x_i(t)^T - \eta_i x_i(t)q_c(t)x_i(t)^T$$

---- Equation 4

The objective function Equation 4 is formulated to maximize the revenue while minimizing the risk involved. This objective function accounts for the energy conversion efficiency $ce$ which is used to convert one unit of a particular energy type $i$ to another energy type $j$ where $i \neq j$.

Risk factor is used to track the risk due to energy market price forecasting error. The forecasting error is determined using the historical market prices and the actual market prices. The risk factor determines each energy type market price based on variability of the energy type market price and the market price forecasting error. The total risk is computed based on summing the forecasting risk and the market price risk (MCP). The forecasting error is determined using the historical market prices and the actual market prices.

In one embodiment, the energy converter 208 conversion cost $cci$ is involved, if and only if the energy of the primary market type is converted to energy of the secondary market type. Equation 5 represents the inequality condition to ensure allocations are non-negative values.

$$x_{i,j}(t) \geq o; \forall j \text{ --------------Equation 5}$$

At step 310 of the method 300 the one or more hardware processors 104 generate an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

The optimal portfolio generator module 210 generates the optimal portfolio for each energy type for the seller to bid in at least one energy market. The optimal split of generated energy among different energy types is determined using the optimal portfolio which considers the seller such as revenue or returns, risk taking ability, and the asset constraints. The objective of the framework is to maximize the revenue risk and tradeoff for the CCGT.

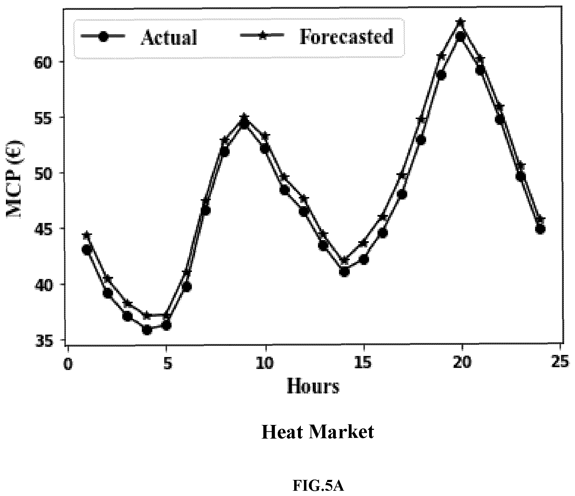

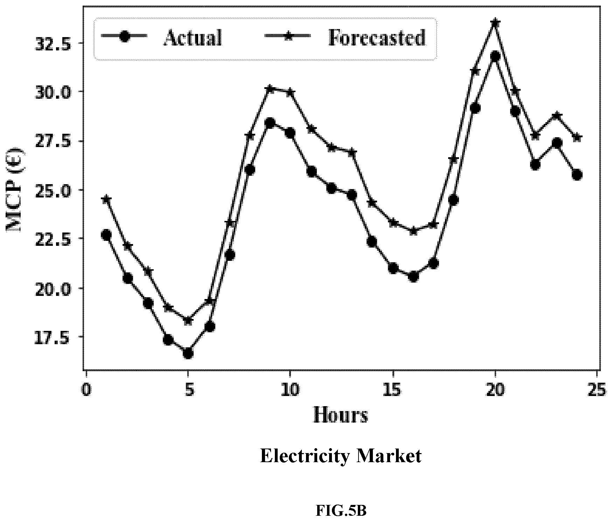

In case of back-pressure type CHP both the heat (referring now FIG. 5A) and the electricity (referring now FIG.5B) are produced simultaneously. Equation 6 captures the relationship between electricity $g_1(t)$ and heat $g_0(t)$ produced,

$$p2h = \frac{g_0(t)}{g_1(t)} \text{ --------- Equation 6}$$

In the practical MES setup consisting of different energy type sellers, the asset is required to adhere to its operational threshold limits to ensure asset safety and operational performance. Therefore, there is a need to explicitly model constraints that ensure asset level ramp and capacity limits.

Equation 7 and Equation 8 are defined in such a way that seller capacity strictly adheres to ramp and capacity conditions for each day ahead market bidding timeslot.

$$\underline{\phi_i} \leq \sum_{j=1}^{n} x_{i,j}(t) \leq \overline{\phi_i} \; ; \; \forall i \in \{1, .. n\} \text{ ------ Equation 7}$$

$$-R_i^d \leq \sum_{j=1}^{n} x_{i,j}(t) - \sum_{j=1}^{n} x_{i,j}(t-1) \leq R_i^u \; ; \; \forall i \text{ ------ Equation 8}$$

This multi-energy optimization is the convex optimization type quadratic problem with good amount of complexity introduced by non-linearity behavior for example time varying energy conversion cost, conversion efficiencies alongside risk modelling and solving.

Generally, energy generators utilizes the natural gas as input to produce its target energy for example the electricity or heat and thereof. This natural gas is procured by energy generators through a contractual agreement of $A_q(t)$

volume at a predetermined price of $A_p(t)$ for each timeslot $t$. The ratio of target energy generated to amount of natural gas fuel consumed by the generator is referred to as fuel efficiency. Also, it is important that any natural gas is effectively used, and any un-utilized volume may well be traded into natural gas energy market, thereby increasing the returns of the generator. The method of the present disclosure finds the optimal portfolio allocations into the heat market and the electricity market and further the un-utilized natural gas volume (Equation 9, Equation 10, Equation 11) are identifies based on the heat market and electricity market portfolios using a fuel efficiency factor. The unutilized natural gas volume by the seller along with price that includes handling costs can be traded into natural gas market. The pure electricity generator is depicted in Equation 9,

$$U_q(t) = A_q(t) - \sum_{j=1}^{n} \frac{x_{i,j}}{eff_i}; \ where \ i = 1 \ ----- \ \text{Equation 9}$$

The pure heat generator is depicted in Equation 10,

$$U_q(t) = A_q(t) - \sum_{j=1}^{n} \frac{x_{i,j}}{eff_i}; \ where \ i = 2 \ ----- \ \text{Equation 10}$$

The CHP generator is depicted in Equation 11,

$$U_q(t) = A_q(t) - \sum_{j=1}^{n} \frac{x_{i,j}}{eff_i}; \ \forall \ i, ..2 \ ----- \ \text{Equation 11}$$

In one embodiment the method of the present disclosure is evaluated using real world data and energy generation data of pure heat generator (Heat Pump), pure electricity generator (CCGT), combined heat and power generator (CHP). Example forecasted data is used 6 months period (for Market data from 1st Jan 2020 to 30th June 2020). Here, the back-pressure CHP, follows linear relationship (Equation 6) between the heat and the electricity generation volumes. Each of these generators use natural gas procured through a contractual agreement for a fixed volume and price to produce heat or electricity or both. The contractual natural gas volume of 15000 KWh units per timeslot in the present disclosure. Here, the experimental data utilized is around 3 years of historical day-ahead wholesale electricity market price data (from 1st of January 2018 till 30th June 2020) for France region from EPEX market. The derived day-ahead heat market price data using a function which uses day-ahead natural gas market data and a conversion logic to reflect the real-world heat prices. Further, three different energy markets for the generators to optimally sell their produced energy either directly or after converting to a secondary energy type. These energy markets exhibit time varying price variability or risk.

Referring now FIG.5A (example comparative plot for heat market at average hourly timeslot) and FIG.5B (example comparative plot for electricity market at average hourly timeslot), the method is evaluated using the experimental data from the NHITS forecasting technique to forecast future energy market prices captured for a specific duration for example from 1st January 2020 to 30th June 2020 using two years (2018 and 2019) of historical energy market price data. The performance is measured of for generating optimal portfolio in terms of its ability to maximize the energy revenue for the seller.

The method is further evaluated for the following scenarios (Table 1 and Table 2) providing higher revenues as baselines such as,

1. Naive-0: The generator bids into the energy market which has the higher MCP for the time block in a day-ahead market bidding setup.
2. Use case 1 - This approach considers objective function Equation 4 with risk aversion coefficients $k = 0 \ and \ \eta = 0$ and constraints (Equation 2, Equation 5-6).

The method is further evaluated for ramp scenarios with non-zero risk aversion coefficient values such as,

3. Use case 2 - The ramp approach considers objective function Equation 4 with risk aversion coefficients $k > 0 \ and \ \eta > 0$, and constraints (Equation 5-8).
4. Use case 3 : This ramp approach considers objective function Equation 4 with risk aversion coefficients $k > 0 \ and \ \eta > 0$, and constraints (Equation 5-11).

In our experimentation setup, the following assumptions, 1. each energy generator has access to different energy type markets (primary and secondary markets), 2. transmission line capacity is considered to be infinite, 3. there is no loss in transmission, 4. there is no cost associated with transmission of energy and 5. linear conversion costs and conversion efficiencies.

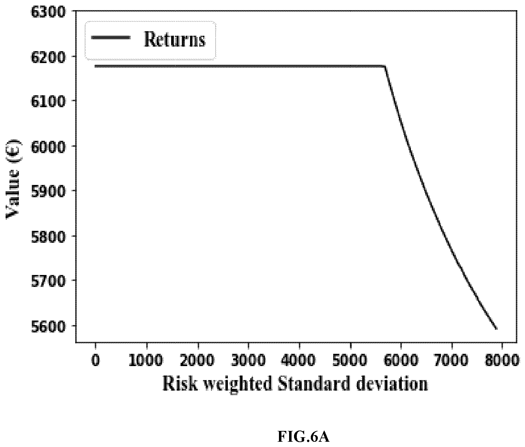

FIG.6A illustrates an example returns versus risk weighted standard deviation using the system of FIG.1, in accordance with some embodiments of the present disclosure.

**Returns vs. Risks** The simulation results are executed using 1st time-of 1st January 2020 data with 100 samples of risk aversion coefficient values. FIG.6A depicts volatility of returns with increase in risk-aversion aware standard deviation. As the risk aversion increases, a drastic drop in returns. Increase in risk-aversion coefficient $k$ and $\eta$ values contribute to corresponding increase in coefficient specific risks. This increase in risk component value contributes to reducing the returns. The method of the present disclosure is robust enough to handle volatility with slight or no reduction to returns until risk coefficient value of 12. The risk coefficient value of about 12 to be the best value for the given market data, as any further increase in risk aversion value beyond 12 reduces the returns drastically.

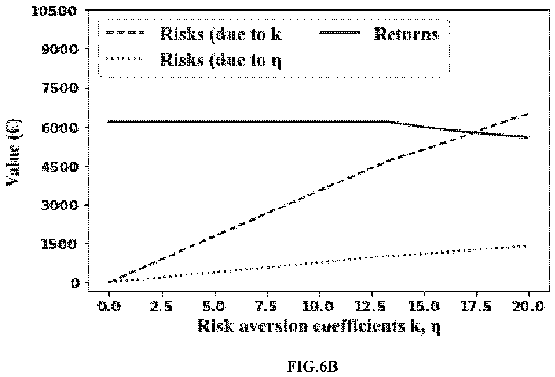

FIG.6B illustrates an example returns versus risk aversion coefficient of using the system of FIG.1, in accordance with some embodiments of the present disclosure. FIG.6B shows the volatility of returns with increase in risk-aversion coefficient $k$ and $\eta$ values.

Table 1 shows the performance result of our simulation run of the present disclosure against Naive approach using 6 months data (Jan to June 2020). From the results, that method of the present disclosure performs better than the Naive method and gives comparatively higher monthly average returns of $\varepsilon$ 7,798.0 for Heat pump, $\varepsilon$ 7,31,036.7 for CCGT, and $\varepsilon$ 11,01,798.0 for CHP. On an average, across the asset types, and achieves an improvement of 8.6%.

Table 1 - Monthly Average Returns $\varepsilon$ for asset types for highest risk aversion ($k$ = 0, $\eta$ = 0)

| Asset type | Naïve-0 x10$^5$ | Present disclosure x10$^5$ |
|---|---|---|
| Heat pump | 48.1 | 48.2 |
| CCGT | 33.8 | 41.1 |
| CHP | 279.2 | 290.2 |

Table 2 - Monthly Average Returns $\varepsilon$ for asset types for highest risk aversion ($k$ = 1, $\eta$ = 1) - Simulation performance result using 6 months data (Jan to June 2020)

| Asset type | Present disclosure (use case 1) x10$^5$ | Existing technique x 10$^5$ | Present disclosure (use case 2) x 10$^5$ | Existing technique with additional constraints [Equation 9-Equation 11] x 10$^5$ |
|---|---|---|---|---|
| Heat pump | 339.1 | 338.9 | 3063.2 | 3063.0 |
| CCGT | 176.6 | 152.0 | 1837.5 | 1812.9 |
| CHP | 226.2 | 218.0 | 2952.0 | 2943.8 |

The scenario with risk aversion coefficient value of $k$ = 1 *and* $\eta$ = 1. The results shows the present disclosure performs better than existing technique and provides comparatively higher monthly average returns of $\varepsilon$ 20,930.9 for heat pump, $\varepsilon$ 24,63,425.3 for CCGT, and $\varepsilon$ 8,18,868.3 for CHP. On an average, across the asset types, the improvement of 6.67% for the present disclosure. Results with other combinations of risk aversion coefficient values leads to reduction in returns.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) of generating an optimal portfolio for seller bidding strategy, the comprising:

   providing (302) by a seller to multi-energy markets via one or more hardware processor prior to bidding day at least one energy type available with the seller, a bidding price of corresponding energy type, and at least one energy type required by a market participant, wherein the bidding day includes a plurality of timeslots at regular intervals for bidding in at least one energy type among the multi-energy markets;

   forecasting (304) using a neural hierarchical interpolation for time series forecasting (NHITS) via the one or more hardware processors an energy market price uncertainties of at least one energy type at the plurality of timeslots on the bidding day in the multi-energy markets based on historical market prices;

   providing (306) by the the seller to the multi-energy markets via the one or more hardware processors a volume of at least one energy type generated based on a plurality of parameters, wherein the seller being an energy participant provides at least one energy type using a multi-carrier energy (MES) system at locations of a power supplier to the multi-energy markets;

   determining (308) by the seller for each energy type in the multi-energy markets via the one or more hardware processors a risk factor based on a market price risk and a forecasting risk based on inputting the historical market price and an actual energy market price of corresponding energy type and computing a total risk for the energy types generated by the seller; and

   generating (310) via the one or more hardware processors an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

2. The processor implemented method as claimed in claim 1, wherein the optimal portfolio splits the generated volume of each energy type to bid at every timeslot of the multi-energy markets.

3. The processor implemented method as claimed in claim 1, wherein the seller generates at least one energy type using energy producing resources comprising renewable energy, electricity, heat, natural gas, and hydrogen.

4. The processor implemented method as claimed in claim 1, wherein the plurality of parameters includes a previous timeslot, a maximum energy limit, a minimum energy limit, a ramp up limit, a ramp down limit and a natural gas input limit.

5. The processor implemented method as claimed in claim 1, wherein the cumulative return is a product of an expected return of each energy type in corresponding energy market and an amount of energy type trade in corresponding energy market and the conversion efficiency.

6. The processor implemented method as claimed in claim 1, wherein the market price risk determines the risk due to energy type market price uncertainties, wherein the forecasting risk determines the risk due to a forecasting error of the market price.

7. The processor implemented method as claimed in claim 1, wherein the forecasting error is determined using the historical market prices and the actual market prices.

8. The processor implemented method as claimed in claim 1, wherein the total risk is computed based on summing the forecasting risk and the market price risk, wherein the risk factor determines each energy type market price based on variability of the energy type market price and the market price forecasting error.

9. A system (100), for generating optimal portfolio for seller bidding strategy comprising:

> a memory (102) storing instructions;
> one or more communication interfaces (106); and
> one or more hardware processors (104) coupled to the memory (102) via the one or more communication interfaces (106), wherein the one or
> more hardware processors (104) are configured by the instructions to:

> > provide by a seller to multi-energy markets prior to bidding day at least one energy type available with the seller, a bidding price of corresponding energy type, and at least one energy type required by a market participant, wherein the bidding day includes a plurality of timeslots at regular intervals for bidding in at least one energy type among the multi-energy markets;
> > forecast using a neural hierarchical interpolation for time series forecasting (NHITS) an energy market price uncertainties of at least one energy type at the plurality of timeslots on the bidding day in the multi-energy markets based on historical market prices;
> > provide by the seller to the multi-energy markets a volume of at least one energy type generated based on a plurality of parameters, wherein the seller being an energy participant provides at least one energy type using a multi-carrier energy (MES) system at locations of a power supplier to the multi-energy markets;
> > determine by the seller for each energy type in the multi-energy markets a risk factor based on a market price risk and a forecasting risk based on inputting the historical market price and an actual energy market price of corresponding energy type and computing a total risk for the energy types generated by the seller; and
> > generate an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

10. The system as claimed in claim 9, wherein the optimal portfolio splits the generated volume of each energy type to bid at every timeslot of the multi-energy markets, wherein the seller generates at least one energy type using energy producing resources comprising renewable energy, electricity, heat, natural gas, and hydrogen.

11. The system as claimed in claim 9, wherein the plurality of parameters includes a previous timeslot, a maximum energy limit, a minimum energy limit, a ramp up limit, a ramp down limit and a natural gas input limit.

12. The system as claimed in claim 9, wherein the cumulative return is a product of an expected return of each energy type in corresponding energy market and an amount of energy type trade in corresponding energy market and the conversion efficiency.

**13.** The system as claimed in claim 9, wherein the market price risk determines the risk due to energy type market price uncertainties, wherein the forecasting risk determines the risk due to a forecasting error of the market price.

**14.** The system as claimed in claim 9, wherein the forecasting error is determined using the historical market prices and the actual market prices, wherein the total risk is computed based on summing the forecasting risk and the market price risk, wherein the risk factor determines each energy type market price based on variability of the energy type market price and the market price forecasting error.

**15.** One or more non-transitory machine-readable information storage mediums comprising one or more instructions which when executed by one or more hardware processors cause:

providing by a seller to multi-energy markets prior to bidding day at least one energy type available with the seller, a bidding price of corresponding energy type, and at least one energy type required by a market participant, wherein the bidding day includes a plurality of timeslots at regular intervals for bidding in at least one energy type among the multi-energy markets;

forecasting using a neural hierarchical interpolation for time series forecasting (NHITS) an energy market price uncertainties of at least one energy type at the plurality of timeslots on the bidding day in the multi-energy markets based on historical market prices;

providing by the the seller to the multi-energy markets a volume of at least one energy type generated based on a plurality of parameters, wherein the seller being an energy participant provides at least one energy type using a multi-carrier energy (MES) system at locations of a power supplier to the multi-energy markets;

determining by the seller for each energy type in the multi-energy markets a risk factor based on a market price risk and a forecasting risk based on inputting the historical market price and an actual energy market price of corresponding energy type and computing a total risk for the energy types generated by the seller; and

generating an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets.

**Optimal portfolio generation system 100**

Hardware Processor(s) **104**

I/O Interface(s) **106**

Memory **102**

Modules **108**

FIG.1

200

Actual energy market prices
current bidding day

Input

**Risk accounting module 206**

Market
price risk
evaluator
206A

Forecasting
risk
evaluator
206B

**Energy converter module 208**

Conversion
cost
evaluator
208A

Conversion
efficiency
evaluator
208B

Input

Historical
energy
market price
prior to
bidding day

Input

Forecasting
Module 204

Optimal
portfolio
generator
module 210

Output
Optimal
portfolio

Input

Energy
Generator

Asset level constraints
accounting module 202

FIG.2

300

providing by a seller to multi-energy markets prior to bidding day at least one energy type available with the seller, a bidding price of corresponding energy type, and at least one energy type required by a

302

forecast using a neural hierarchical interpolation for time series forecasting (NHITS) an energy market price uncertainties of at least one energy type at the plurality of timeslots on the bidding day in the multi-energy markets based on historical market prices

304

provide by the seller to the multi-energy markets a volume of at least one energy type generated based on a plurality of parameters, wherein the seller being an energy participant provides at least one energy type using a multi-carrier energy (MES) system at locations of a power supplier to the multi-energy markets

306

determine for each energy type of the seller to bid in the multi-energy markets a risk factor based on a market price risk and a forecasting risk by inputting the historical market price and an actual energy market price of corresponding energy type and computing a total risk for the energy types generated by the seller

308

generate an optimal portfolio for each energy type for the seller to bid in at least one energy market among the multi-energy markets based on the energy market price forecasted for each energy type, the volume of energy type generated by the seller, the plurality of total risks, a conversion cost, a conversion efficiency of energy converter and computing a cumulative return for the multi-energy markets

310

**FIG.3**

**400**

Input energy type
resource

Output Optimal
portfolio

Natural Gas
(Contract)

Natural Gas

Natural Gas
(Other
Sources)

'N'

Optimal portfolio generator
210

Energy seller

Energy converter 208

(Heat Pump,
Electrolyzers)

Natural Gas
(Market)

Electricity Market

Heat Market

Hydrogen Market

'M'

**FIG.4**

**Heat Market**

**FIG.5A**

**Electricity Market**

**FIG.5B**

**FIG.6A**

**FIG.6B**

Europäisches Patentamt

European Patent Office

Office européen des brevets

# EUROPEAN SEARCH REPORT

**Application Number**

EP 24 19 1640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/284458 A1 (SUN HONGBO [US]) 8 September 2022 (2022-09-08) * paragraphs [0001] - [0013], [0070] - [0078]; claim 17 * | 1-15 | INV. G06Q10/04 G06Q30/08 G06Q40/04 G06Q50/06 |
| Y | CRISTIAN CHALLU ET AL: "N-HiTS: Neural Hierarchical Interpolation for Time Series Forecasting", ARXIV.ORG, CORNELL UNIVERSITY LIBRARY, 201 OLIN LIBRARY CORNELL UNIVERSITY ITHACA, NY 14853, 2 February 2022 (2022-02-02), XP091148169, * page 2 * | 1-15 | |
| A | US 2002/194113 A1 (LOF PER-ANDERS K [SE] ET AL) 19 December 2002 (2002-12-19) * claims 1-4; figure 2 * | 1-15 | |
| A | ZHANG RUFENG ET AL: "Coordinated Bidding Strategy of Wind Farms and Power-to-Gas Facilities Using a Cooperative Game Approach", IEEE TRANSACTIONS ON SUSTAINABLE ENERGY, IEEE, USA, vol. 11, no. 4, 10 January 2020 (2020-01-10), pages 2545-2555, XP011809660, ISSN: 1949-3029, DOI: 10.1109/TSTE.2020.2965521 [retrieved on 2020-09-17] * page 2551 - page 2553 * | 1-15 | **TECHNICAL FIELDS SEARCHED (IPC)**<br><br>G06Q |
| A | CN 114 626 922 A (LIAONING PROVINCE ELECTRIC POWER LTD COMPANY OF STATE GRID ET AL.) 14 June 2022 (2022-06-14) * claims 1-4 * | 1-15 | |

The present search report has been drawn up for all claims

| Place of search | Date of completion of the search | Examiner |
|---|---|---|
| Munich | 18 December 2024 | Kerschbaumer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1640

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2024

| Patent document cited in search report | Publication date | Patent family member(s) | | Publication date |
|---|---|---|---|---|
| US 2022284458 A1 | 08-09-2022 | JP | 2022130284 A | 06-09-2022 |
| | | US | 2022284458 A1 | 08-09-2022 |
| US 2002194113 A1 | 19-12-2002 | EP | 1395931 A1 | 10-03-2004 |
| | | US | 2002194113 A1 | 19-12-2002 |
| | | WO | 02103588 A2 | 27-12-2002 |
| CN 114626922 A | 14-06-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321057751